Europäisches Patentamt

European Patent Office

Office européen des brevets

(19)

(11) Veröffentlichungsnummer: **0 002 702**
**B1**

(12) **EUROPÄISCHE PATENTSCHRIFT**

(21) Anmeldenummer: **78101607.6**

(22) Anmeldetag: **08.12.78**

(51) Int. Cl.³: **A 21 B 1/40,** A 21 B 1/10,
F 23 N 3/02, F 24 C 15/32

(54) **Etagenbackofen mit Heizgasumwälzheizung.**

(30) Priorität: **23.12.77 DE 2757618**

(43) Veröffentlichungstag der Anmeldung:
**11.07.79 Patentblatt 79/14**

(45) Bekanntmachung des Hinweises auf die Patenterteilung:
**11.02.81 Patentblatt 81/6**

(84) Benannte Vertragsstaaten:
**BE DE FR GB IT NL**

(56) Entgegenhaltungen:
**DE - C - 139 367**
**FR - A - 576 945**

(73) Patentinhaber: **Werner & Pfleiderer**
**Theodorstrasse 10**
**D-7000 Stuttgart 30 (DE)**

(72) Erfinder: **Luther, Eduard**
**Beethovenstrasse 14**
**D-7141 Möglingen (DE)**
(72) Erfinder: **Schröder, Helmut**
**Fellbacher Strasse 6**
**D-7140 Ludwigsburg-Ossweil (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Etagenbackofen mit Heizgasumwälzheizung

Die Erfindung betrifft einen Etagenbackofen mit Heizgasumwälzheizung, bei dem für die Heizkanäle mindestens einer Backkammer die Heizgasströmung mittels einer Absperrvorrichtung abschaltbar ist und im Abgasstutzen des Umwälzkreises eine Verstellbare Drossel zur Regelung des Saugzugs vorgesehen ist.

Ein Backofen der vorstehend genannten Art ist beispielsweise bekannt aus der FR-A-1 359 833. Die Abschaltbarkeit einer Backkammer oder einer Gruppe von Backkammern vom Umwälzkreis ermöglicht einer Anpassung der Backkapazität des Ofens an den jeweiligen Bedarf an Backfläche, welcher innerhalb eines bestimmten Zeitraums erheblichen Schwankungen unterliegen kann.

Bei einem anderen bekannten Backofen mit einer vom Umwälzkreis abschaltbaren Gruppe von Backherden erfolgt die Angleichung der Heizgastemperaturen an die veränderliche Backfläche mittels eines zweistufigen Brenners, der mit elektrischen Mitteln in Abhängigkeit von der Stellung der die Herdgruppe abschaltenden Drosselklappe gesteuert wird (DE-U-7 245 033). Als weitere Maßnahme zur Anpassung an den veränderten Betriebszustand beim Zu- oder Abschalten einer Herdgruppe ist die Zuordnung je eines eigenen Umwälzsystems mit einem Ventilator zu jeder Herdgruppe bekannt (DE-B-2 238 411). Die vorstehend erwähnten Maßnahmen verteuern die Herstellung des Backofens erheblich und machen ihn außerdem störungsanfällig.

Der Erfindung liegt die Aufgabe zugrunde, bei einem Backofen eingangs genannter Art in einfacher Weise eine Anspassung der Verbrennungsverhältnisse am Brenner beim Zu- oder Abschalten einer Backkammer oder einer Backkammergruppe herbeizuführen.

Erfindungsgemäß wird diese Aufgabe dadurch gelöst, daß die Absperrvorrichtung und die Drossel durch eine gemeinsame Betätigungseinrichtung derart miteinander gekoppelt sind, daß beim Öffnen der Absperrvorrichtung die Drossel geschlossen wird und umgekehrt. Auf diese Weise werden die beim Öffnen und Schließen der Absperrvorrichtung sich ergebenden Änderungen des Saugzugs am Brenner automatisch kompensiert, so daß stets gleichbleibende Verbrennungsverhältnisse gegeben sind. Letzteres ist vor allem in Hinblick auf die strengen Umweltschutzbestimmungen von erheblicher Bedeutung.

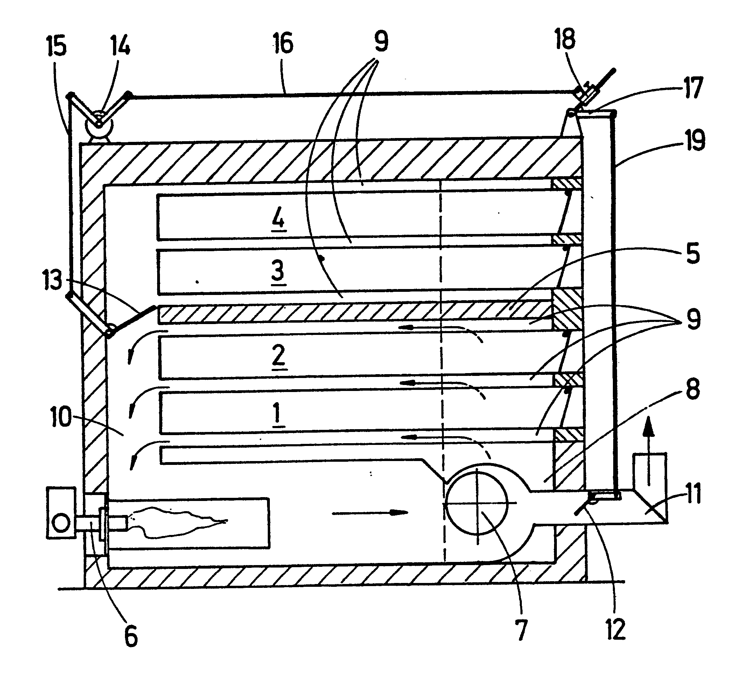

Die Zeichnung zeigt ein Ausführungsbeispiel der Erfindung, welches nachstehend näher erläutert wird.

Im Längsschnitt schematisch dargestellt ist ein Etagenbackofen mit vier übereinander angeordneten Backkammern 1, 2, 3 und 4, von denen jeweils die beiden oberen und unteren zu einer Backkammergruppe zusammengefaßt sind. Zwischen den Backkammergruppen ist eine Isolierschicht 5 vorgesehen. Der Umwälzkreis für das vom Brenner 6 erzeugte Heizgas besteht in bekannter Weise aus einem Ventilator 7, seitlichen Verteilerkanälen 8, Heizkanälen 9 unter- und oberhalb der Backkammern 1 bis 4 sowie einem Sammelkanal lo. auf der Druckseite des Ventilators 7 ist ein Abgasstutzen 11 vorgesehen, der mit einer verstellbaren Drossel 12 zur Regelung des Saugzugs ausgestattet ist.

Im Sammelkanal lo befindet sich in Höhe der Isolierschicht 5 eine Absperrvorrichtung in Gestalt einer Klappe 13, welche von einem Stellmotor 14 über ein Gestänge 15 geöffnet oder geschlossen werden kann. In der Zeichnung ist die Klappe 13 in geschlossener Stellung gezeigt, wobei für die Heizkanäle 9 der oberen Backkammer 3 und 4 die mit Pfeilen angedeutete Heizgasströmung abgeschaltet ist. Vom Stellmotor 14 führt ein Gestänge 16 zum einen Arm eines Winkelhebels 17, der mit einer Schiebemuffe 18 versehen ist. Der andere Arm des Winkelhebels 16 steht über ein Gestänge 19 mit der Drossel 12 in Verbindung. Die Stellung der Drossel 12 und damit die Stärke des Saugzugs lassen sich durch Verstellen der Schiebemuffe 18 auf dem einen Arm des Winkelhebels 17 genau regulieren.

In der in der Zeichnung gezeigten Stellung der Klappe 13 sind die Drossel 12 und der Lufteintritt am Brenner 6 so eingestellt, daß sich eine gute Verbrennung ergibt. Wenn nun eine größere Backfläche erforderlich ist, wird durch Betätigung des Stellmotors 14 die Klappe 13 geöffnet. Damit sind die Heizkanäle 9 der oberen Backkammern 3, 4 in den Umwälzkreis eingeschaltet. Gleichzeitig wird vom Stellmotor 14 über die Gestänge 16, 19 die Drossel 12 geschlossen, d.h. in eine den Querschnitt des Abgasstutzens 11 stärker als vorher verengende Stellung gebracht. Umgekehrt wird beim Abschalten der beiden oberen Backkammern 3, 4 durch Schließen der Klappe 13 automatisch die Drossel 12 geöffnet, so daß sich bei jeder Stellung der Klappe 13 praktisch gleichbleibende Verbrennungsverhältnisse ergeben.

**Patentanspruch**

Etagenbackofen mit Heizgasumwälzheizung, bei dem für die Heizkanäle (9) mindestens einer Backkammer (1, 2, 3, 4) die Heizgasströmung mittels einer Absperrvorrichtung (13) abschaltbar ist und im Abgasstutzen (11) des Umwälzkreises eine verstellbare Drossel (12) zur Regelung des Saugzugs vorgesehen ist, dadurch gekennzeichnet, daß die Absperrvorrichtung (13) und die Drossel (12) durch eine gemeinsame Betätigungseinrichtung (15, 14, 16, 19) derart miteinander gekoppelt sind, daß beim Öffnen der Absperrvorrichtung (13) die Drossel (12) geschlossen wird und umgekehrt.

## Revendication

Four de boulangerie à étages, à chauffage par circulation de gaz chauds, dans lequel le passage des gaz dans les canaux de chauffage (9) d'au moins und chambre de combustion (1, 2, 3, 4) peut être interrompu au moyen d'un dispositif obturateur (13) et dans lequel un volet étrangleur réglable (12), destiné à régulariser le tirage, est disposé dans le tuyau (11) d'évacuation des gaz brûlés, four caractétisé par le fait que le dispositif obturateur 13) et le volet étrangleur (12) sont reliés par un dispositif commun de manoeuvre (15, 14, 16, 19), de façon que, lorsque ce dispositif obturateur (13) s'ouvre, ce volet (12) se ferme, et vice-versa.

## Claim

Baking oven comprising multiple compartments heated by hot gas circulation, in which the hot gas flow for the heating channels (9) of at least one baking chamber (1, 2, 3, 4) can be switched off by means of a shut-off device (13) and an adjustable throttle (12) for the regulation of the induced draft is provided in the exhaust connection (11) of the circulation circuit, characterised thereby, that the shut-off device (13) and the throttle (12) are coupled with each other through a common actuating device (15, 14, 16, 19) in such a manner that the throttle (12) is closed during opening of the shut-off device (13) and conversely.